# EUROPEAN PATENT APPLICATION

(11) **EP 4 822 647 A1**
(43) Date of publication of application: **14.10.2026**
(21) Application number: 26168835.2
(22) Date of filing: 30.03.2026
(51) Int. Cl.: G06T 11/60

(54) **VISUAL EDITOR FOR SPECIFYING PREFERRED REPRESENTATION OF REQUESTED GENERATIVE VISUAL CONTENT**

(30) Priority: 08.04.2025 IN 202511034464
(71) Applicant: Google LLC, Mountain View, CA 94043 (US)
(72) Inventor: GOVINDARAJU, Raviteja, Mountain View California, 94043 (US); SEDOURAM, Ramprasad, Mountain View California, 94043 (US)
(74) Representative: Collingwood-Pierce, Alexandra Isobel Seymour

(57) **Abstract**

Implementations set forth herein relate to a generative application that provides a visual content editor in response to receiving a request for generative visual content. The visual content editor can be provided with an intermediate representation of the generative visual content requested by a user, thereby allowing the user to adjust the intermediate representation. Such adjustments can involve annotating the intermediate representation, adjusting orientation, zoom, gaze, or other features of the intermediate representation. Such modifications to the intermediate representation can then be processed with the initial request from the user to ultimately render the requested generative visual content. The generative visual content can include, for example, generative image content, generative visual content, or other generative visual content.

## Description

### Background

Humans may engage in human-to-computer dialogs with interactive software applications referred to herein as "automated assistants" (also referred to as "digital agents," "chatbots," "interactive personal assistants," "intelligent personal assistants," "assistant applications," "conversational agents," etc.). For example, humans (which when they interact with automated assistants may be referred to as "users") may provide commands and/or requests to an automated assistant using spoken natural language input (*i.e.,* utterances), which may in some cases be converted into text and then processed, and/or by providing textual (*e.g*., typed) natural language input.

**In** some instances, an automated assistant or other generative application can receive requests for generative visual content. Such requests can be resource intensive, as they require processing, often by a remote server, which consumes significant power and processing bandwidth. When a user requests generative visual content, such as a generative image or video, the returned image may not completely satisfy the request from the user. As a result, the user may propound multiple requests directed to receive the same generative visual content. If this practice is a common occurrence for a pool of hundreds of thousands of users, the amount of power and processing bandwidth that is wasted can be staggering. For instance, a user that simply wants to change a perspective of generative visual content may re-submit a request, but with some updated language regarding the perspective. The amount of computational resources consumed for both requests may be similar, and excessive, despite there being little difference between the generated images.

### Summary

Implementations set forth herein relate to an automated assistant or other generative application that can provide generative visual content that is based on a user-modified intermediate representation of the generative visual content. The intermediate representation can be modified by the user or other application via a visual content editor that can be available to the user in response to the user soliciting the generative application to provide the generative visual content. The intermediate representation can be a reduced version of the generative visual content, at least with respect to how much memory and/or computational resources are consumed by storing and/or processing the intermediate representation in memory relative to storing the generative visual content.

In some implementations, a user can provide an input to a generative application in furtherance of receiving generative visual content. The input can be a natural language input request, such as a textual input or a spoken input, to an interface for providing requests to the generative application. The input can be initially processed using a local model for generating an intermediate representation that can be modified by the user. In some implementations, a graphical user interface (GUI) is generated based on the input and the GUI can include selectable elements for modifying the intermediate representation of the requested generative visual content. Each selectable element can be provided at the GUI based on the input, thereby allowing the intermediate representation to be modified to more resemble an image intended to be received by the user.

The intermediate representation can be a reduced image relative to the generative visual content, at least with respect to the amount of data being utilized to represent the intermediate representation. For instance, the reduced image may only include a subset of the requested generative visual content, such as an object in a bounding box that is smaller than the full image. In this way, the GUI utilized for editing the intermediate representation can exhibit reduced latency. When a user has completed their modifications to the intermediate representation via the editor GUI, data characterizing the modified intermediate representation can be processed using one or more trained machine learning models. This processing can be performed in furtherance of generating the generative visual content requested by the user.

In some implementations, a user can provide a request for generative visual content (*e.g*., a generative image, a generative video, etc.) and, in response, certain GUI elements can be rendered based on the content of the request. For example, a GUI can be rendered with an intermediate representation of the requested generative visual content. Simultaneous to rendering the GUI, additional GUI elements can be rendered for interacting with the intermediate representation. These interactive GUI elements can be selected according to one or more heuristic processes and/or using one or more trained machine learning models. For example, when a request identifies a person or other entity (*e.g*., person, animal, vehicle, or other entity), certain interactive GUI elements can be rendered for modifying features of an intermediate representation of the person or living creature. These interactive GUI elements can include a scroll bar for modifying the direction that the person is facing, a bounding box that can be adjusted to reflect a desired amount of zoom or focus on the person or living creature, a dropdown menu for selecting a particular context for the person or living creature, a slider bar for adjusting an intensity of a particular feature or activity rendered in the intermediate representation of the generative content, and/or any other type of GUI element that can be utilized to modify visual content.

In some implementations, processing of the request can be performed at a local computing device using a local trained machine learning model for generating the intermediate representation of the generated visual content and for generating the interactive GUI elements for adjusting the intermediate representation. The local computing device can be, for example, a laptop, cellular phone, tablet computer, and/or any other computing device that a user operates and connects to a local area network. When the user has completed any modifications to the intermediate representation data characterizing the intermediate representation, the request can be provided to a remote computing device or other network device for generating the requested generated visual content.

For example, the user can submit a request for generative visual content that includes a particular car driving on a particular road during a particular time of day. In response to receiving the request, one or more local models can be utilized for processing the request and generating a reduced version of the generative visual content, along with interactive GUI elements. The interactive GUI elements rendered with the intermediate representation can, for example, modify: (1) an amount of zoom that is exhibited by the intermediate representation relative to the particular car, (2) an intensity of the particular time of day such as how dark the sky is, (3) a geographic location for the road that is represented in the intermediate representation; and/or (4) a speed at which the car is perceived to be moving.

In this example, data characterizing the interactions with the GUI elements can be generated by the local computing device for further processing with the initial request at a remote computing device. In other words, data characterizing the initial request, the intermediate representation, and the adjustments to the zoom, intensity, geographic location, and speed can be communicated to a remote computing device for processing. The remote computing device may have more computational resources available relative to the local computing device, therefore more detailed generative visual content can be generated at the remote computing device.

However, by leveraging the capabilities of a relatively lightweight model at the local computing device, more accurate generative content can be provided from the remote computing device through fewer turns. In other words, a user would waste significant computational resources with each turn that does not result in a satisfactory generative visual content. The implementations discussed herein eliminate such waste by providing a reduced version of the generative visual content that can be interacted with, annotated, and/or otherwise amended before submitting to the remote computing device. This intermediate step eliminates the need to wholly resubmit a request and encourages a user to provide more visual details that might otherwise be intuitive for the user to describe until they see the intermediate representation. Generative visual content, such as a digital image or video, can therefore be enhanced or modified by a user in a computationally resource efficient manner.

As described herein, the one or more machine learning models can be any generative machine learning model capable of generating generative vision data, generative audio data, generative textual data, and/or other forms of generative data. Some non-limiting examples of machine learning models that are capable of generating one or more forms of the generative data noted above include transformer-based machine learning models (e.g., encoder-decoder transformer models, encoder-only transformer models, decoder-only transformer models, etc. that employ an attention mechanism), diffusion-based machine learning models, recurrent neural network-based machine learning models, generative adversarial network-based machine learning models, sequence-to-sequence machine learning models, etc. Various machine learning models have demonstrated multimodal capabilities in that they are capable of processing inputs in various modalities (e.g., text-based inputs, vision-based inputs, audio-based inputs, etc.) and generating outputs in various modalities (e.g., text-based output, vision-based outputs, audio-based generative outputs, etc.). Notably, one or more of the trained machine learning models may be executed at a local computing device and one or more of the trained machine learning models may be executed at a remote computing device (e.g., that is separate from the local computing device).

The above description is provided as an overview of some implementations of the present disclosure. Further description of those implementations, and other implementations, are described in more detail below.

### Brief Description of the Drawings

FIG. 1A, FIG. 1B, FIG. 1C, and FIG. 1D illustrate views of a user interacting with a generative application that provides an interface for modifying an intermediate representation of generative visual content.
FIG. 2 illustrates a system that provides an interface for modifying an intermediate representation of generative visual content before relying on additional processing to render the requested generative visual content.
FIG. 3 illustrates a method for providing a visual content editor for an intermediate representation of generative content in furtherance of preserving computational resources and providing more accurate generative visual content.
FIG. 4 is a block diagram of an example computer system.

### Detailed Description

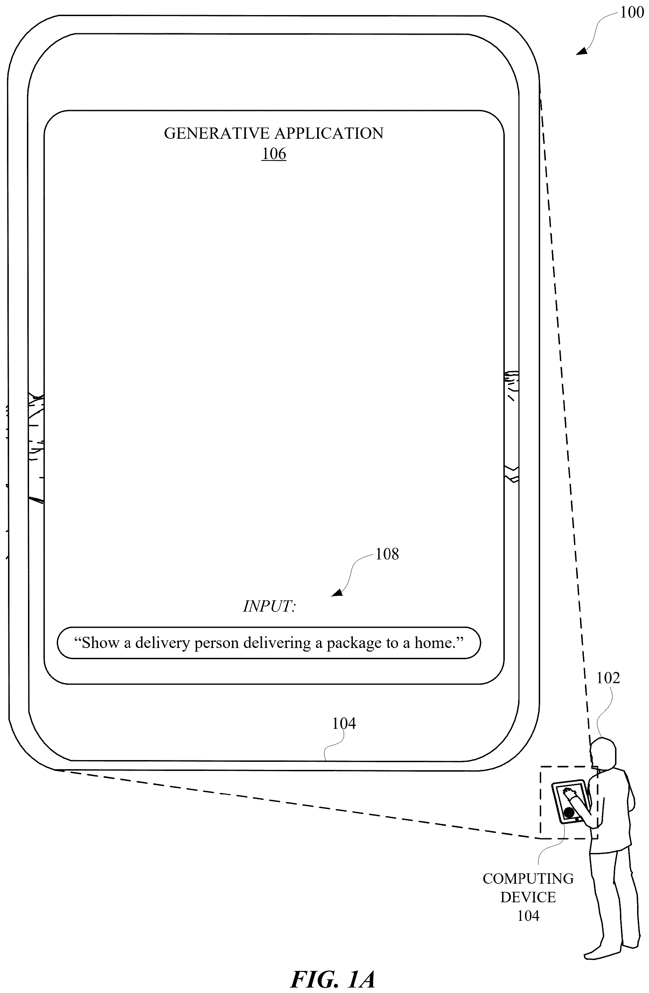

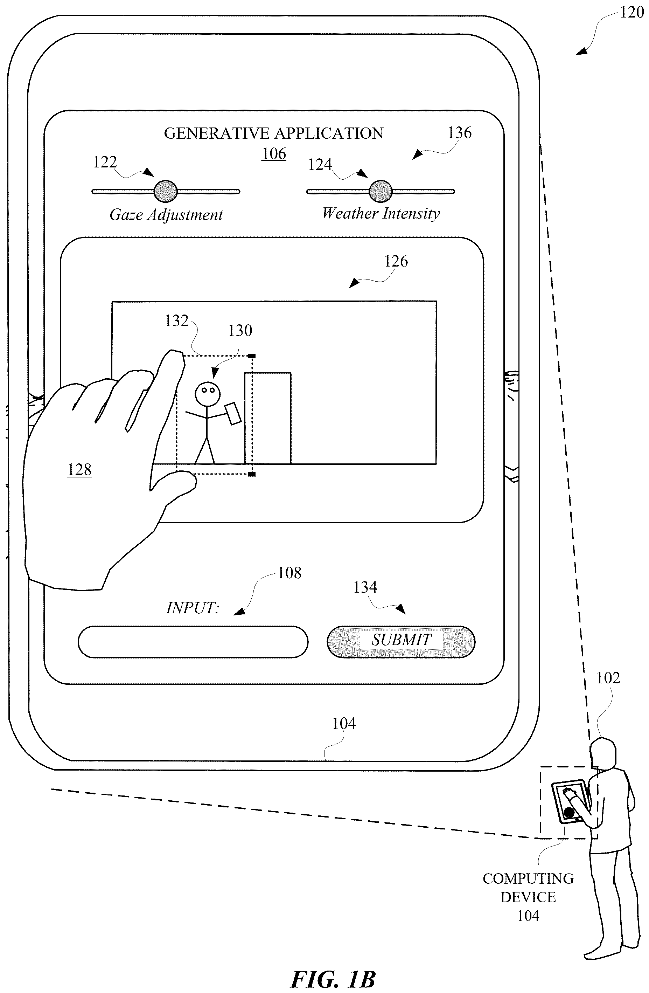

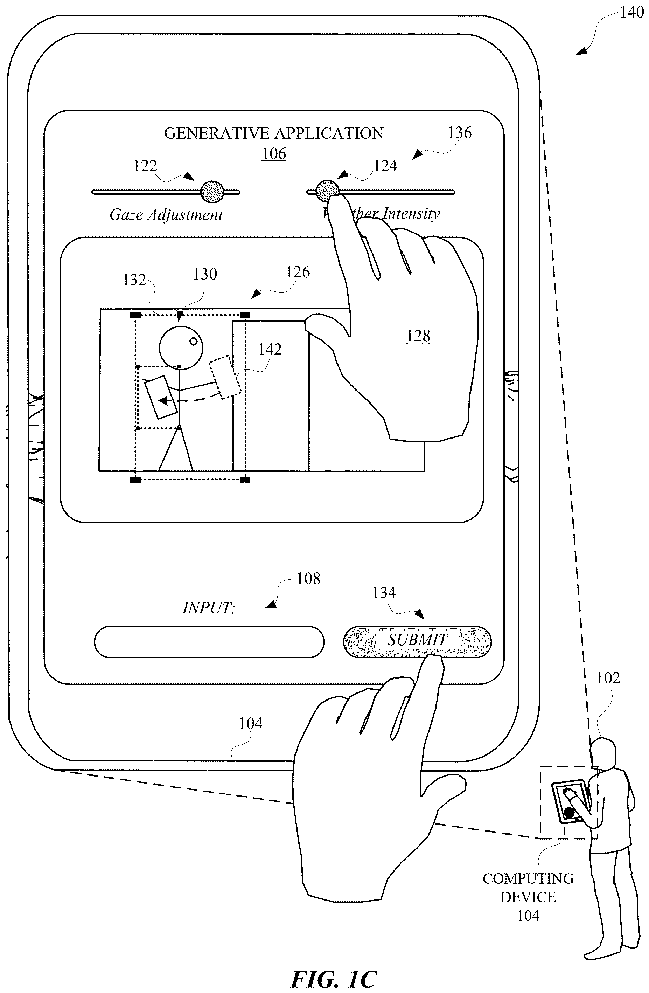

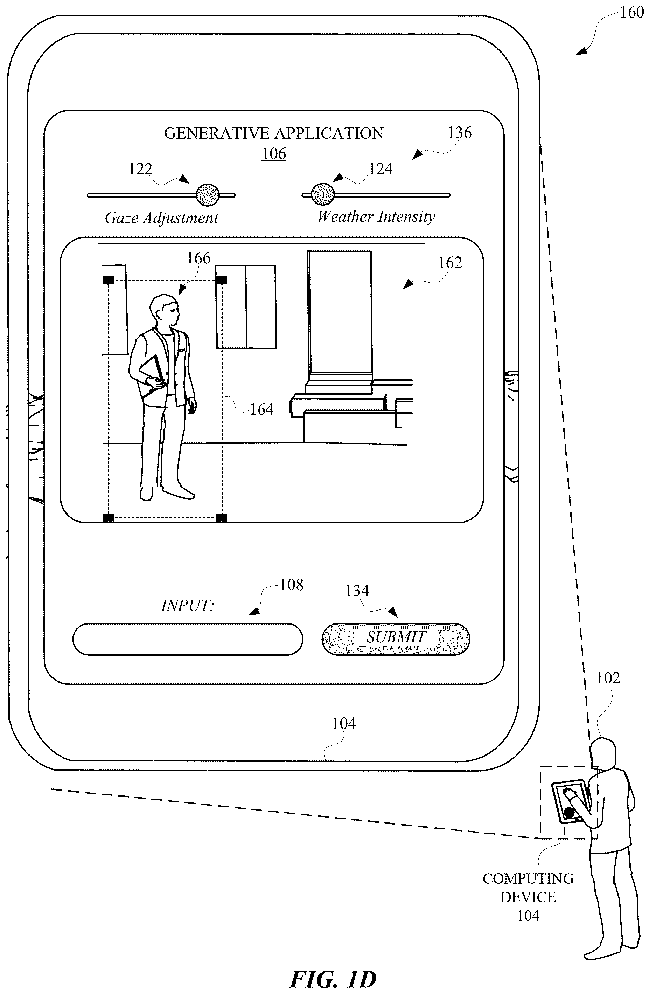

FIG. 1A, FIG. 1B, FIG. 1C, and FIG. 1D illustrate views 100, 120, 140, and 160, respectively, of a user 102 interacting with a generative application 106 that provides an interface for modifying an intermediate representation of generative visual content. FIG. 1A illustrates a view 100 of the user 102 accessing the generative application 106 from a computing device 104. An interface of the generative application 106 can include an input field 108, through which the user 102 can provide a textual input and/or spoken input for requesting generative content from the generative application 106. The generative content capable of being produced by the generative application 106 can include text, images, sound, video, and/or any other content that can be generated by a computing device. For example, the user 102 can provide a textual input such as "Show a delivery person delivering a package to a home", which can correspond to a request for generative visual content. In response to receiving this textual input, the generative application 106 can provide an intermediate representation of the generative visual content requested by the user 102.

In some implementations, in response to receiving a request for generative visual content, a visual editor 136 can be rendered at the computing device 104, as illustrated in FIG. 1B. The visual editor 136 can include one or more interactive GUI elements for modifying an intermediate representation 126 of the requested generative visual content. In some implementations, each GUI element can be selected for rendering at the generative application 106 according to one or more heuristic processes and/or one or more trained machine learning models. For example, in response to receiving the textual input at the input field 108, shown in FIG. 1A, the generative application 106 can render the intermediate visual representation 126, along with a bounding box 132, an adjustable GUI element 122, and an adjustable GUI element 124.

Although certain GUI elements are depicted in FIG. 1B, it should be understood that is for the sake of example and is not meant to be limiting. For example, one or more GUI elements that are specific to the input provided by the user can additionally, or alternatively be provided. In the example of FIGS. 1A and 1B, the one or more GUI elements that are specific to the input provided by the user can include, for example, a GUI element associated with a type of the package, a GUI element associated with a size of the package, a GUI element associated with a gender and/or ethnicity of the delivery person, and so on. As another example, one or more GUI elements that are not specific to the input provided by the user can additionally, or alternatively be provided. The one or more GUI elements that are not specific to the input provided by the user can include, for example, a GUI element associated with a camera angle for the visual content, a GUI element associated with a focus level or target of the visual content, a GUI element associated with coloring one or more portions of the visual content, a GUI element associated with transforming the visual content into a three-dimensional experience (e.g., for consumption via virtual reality or augmented reality), and/or other GUI elements.

The generative application 106 can render a bounding box 132 at or near an entity 130, rendered as part of the intermediate representation 126. In some implementations, the generative application 106 can render the bounding box 132 in response to the user 102 requesting visual content that includes one or more humans, animals, vehicles, or other entities. In this way, the user 102 can interact with the bounding box 132 (*e.g.,* using their hand 128) to cause a zoom or perspective of the intermediate representation 126 to be modified relative to the entity 130, move the bounding box 132 around the intermediate visual representation 126, adjust a size of the bounding box 132 in the intermediate visual representation 126. Allowing the user 102 to make such a modification ahead of any final generative visual content being rendered can preserve computational resources that might otherwise be consumed when users repeatedly refine and submit their textual input until a final suitable generative image is provided.

In some instances, the user 102 can interact with an adjustable GUI element 122 and/or an adjustable GUI element 124, or otherwise provide a user gesture, to further modify the intermediate representation 126. For example, because the textual input provided by the user 102 identifies a human and a landscape or outdoor event, the adjustable GUI elements (*e.g*., a slider, scroll bar, two-dimensional element, three-dimensional element, etc.) can be selected to control a gaze of the rendered entity 130 and an amount of weather exhibited in the visual representation 126. In some implementations, these adjustable GUI elements can be selected according to one or more heuristic processes and/or one or more trained machine learning models. For example, an embedding can be generated and mapped to a latent space based on the textual input received from the user 102. The latent space can include other embeddings that can correspond to controls for including at the visual editor 136. For example, a distance between an input embedding and existing embeddings can be determined and compared to a threshold distance for determining whether any particular existing embeddings are related to the input embedding. When certain existing embeddings satisfy the threshold, the controls corresponding to those existing embeddings can be selected for including with the visual editor 136. In accordance with the example illustrated in FIG. 1B, the controls related to the textual input from the user 102 can include a gaze adjustment control and a weather intensity control. The controls that are selected based on the embedding mappings can also include the bounding box 132.

As shown in FIG. 1C, the user 102 can interact with the visual editor 136 in furtherance of generating generative visual content data that characterizes adjustments being made to the intermediate representation. For example, the user 102 can modify the gaze adjustment by interacting with the adjustable GUI element 122, thereby causing a gaze of the entity 130 to be offset from an original gaze of the entity 130. Alternatively, or additionally, the user 102 can modify an adjustable GUI element 124 to lessen an intensity of any weather exhibited in the visual representation 126. Alternatively, or additionally, the user 102 can adjust the bounding box 132 rendered with the visual representation 126 to modify a zoom of the visual representation 126 to be enlarged relative to an original size of the rendered entity 130, drag the gaze of the rendered entity 130 in a desired direction, etc. In some implementations, the user 102, the visual editor 136 can facilitate interactions between the user and portions of the visual representation 126. For example, certain features of the visual representation 126 can be relocated and/or otherwise adjusted by a touch input from the user 102 to a touch interface of the computing device 104. As illustrated in FIG. 1C, a user 102 can relocate a representation of a package 142 being held by the entity 130 from a left hand of the entity 130 to a right hand of the entity 130.

Allowing the user 102 to modify the intermediate representation 126 before any final generative visual content is rendered can mitigate waste of computational resources that might otherwise be wasted generating multiple final instances of the requested generative visual content. For example, adjustments to the intermediate representation 126 can be processed at the computing device 104 rather than at a remote computing device or server device, thereby preserving computational resources at any devices utilized by the generative application 106. In other words, the textual input received from the user 102 at the input field 108 can be processed at the computing device 104 to generate the intermediate representation 126. Once the intermediate representation 126 is generated and the user 102 has performed certain modifications at the visual editor 136, the final generative visual content can be generated by a remote computing device. The operations performed by the remote computing device can be more consuming of computational resources relative to operations performed by the computing device 104. Therefore, by providing the user 102 with an opportunity to edit the intermediate representation 126, a number of turns between the computing device 104 and the remote computing device can be reduced, thereby mitigating waste of computational resources at both devices. Generative visual content, such as a digital image or video, can therefore be enhanced or modified in a computationally resource efficient manner.

As the user 102 interacts with the visual editor 136, visual editor data can be generated for processing at the remote computing device with the textual input from the user 102. This data can then be submitted to the remote computing device in response to the user 102 selecting to submit 134 the initial input and visual editor data to the remote computing device for further processing. As illustrated in FIG. 1D, generative visual content 162 can be rendered at the generative application 106 based on processing the visual editor data and the initial input from the user 102. In some implementations, the user 102 can continue to interact with the visual editor 136 in furtherance of modifying the generative visual content 162. For example, another bounding box 164 can be rendered at the visual editor 136 with the adjustable GUI elements, thereby allowing the user 102 to modify a representation of an entity 166 rendered with the generative visual content 162. The entity 166 can correspond to a version of the entity previously rendered at the visual editor 136. The previous entity can be a reduced version of the entity 166, at least for purposes of reducing an amount of data being processed to adjust the intermediate representation 126. In some implementations, should the user 102 decide to make additional adjustments to the generative visual content 162, the user 102 can submit 134 the generative visual content 162 for further processing. In some implementations the generative application 106 can include a GUI element for causing the generative visual content 162 to be rendered in a reduced format for making subsequent adjustments to the visual intermediate representation 126. The reduced visual representation can then be adjusted again, as illustrated and discussed with respect to FIG. 1B and FIG. 1C.

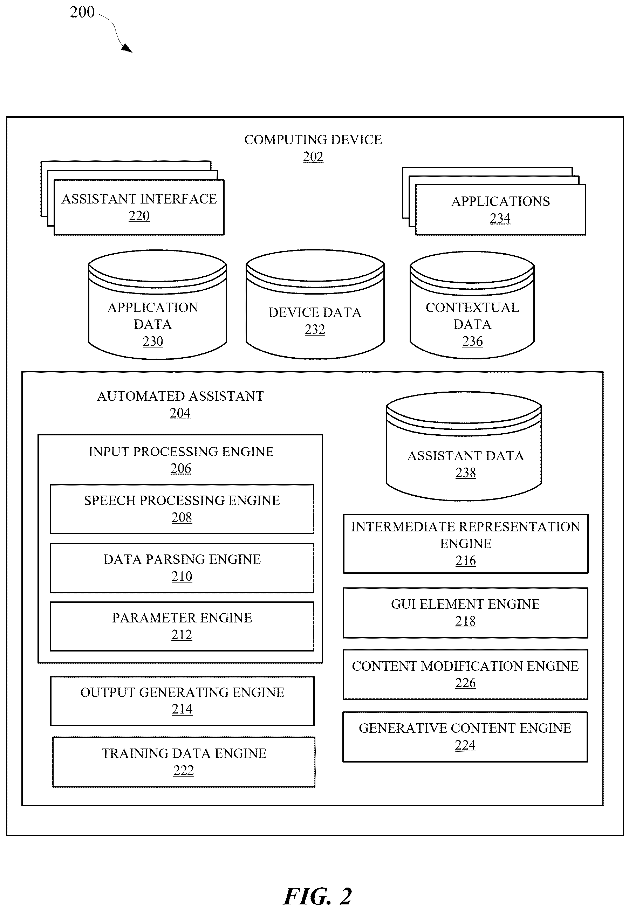

FIG. 2 illustrates a system 200 with a generative application that facilitates modifying an intermediate representation of generative visual content before relying on additional processing to render the requested generative visual content. The generative application can be referred to as an automated assistant 204 that can operate as part of an assistant application that is provided at one or more computing devices, such as a computing device 202 and/or a server device. A user can interact with the automated assistant 204 via assistant interface(s) 220, which can be a microphone, a camera, a touch screen display, a user interface, and/or any other apparatus capable of providing an interface between a user and an application. For instance, a user can initialize the automated assistant 204 by providing a verbal, textual, and/or a graphical input to an assistant interface 220 to cause the automated assistant 204 to initialize one or more actions (*e.g*., provide data, control a peripheral device, access an agent, generate an input and/or an output, etc.). Alternatively, the automated assistant 204 can be initialized based on processing of contextual data 236 using one or more trained machine learning models. The contextual data 236 can characterize one or more features of an environment in which the automated assistant 204 is accessible, and/or one or more features of a user that is predicted to be intending to interact with the automated assistant 204. The computing device 202 can include a display device, which can be a display panel that includes a touch interface for receiving touch inputs and/or gestures for allowing a user to control applications 234 of the computing device 202 via the touch interface. In some implementations, the computing device 202 can lack a display device, thereby providing an audible user interface output, without providing a graphical user interface output. Furthermore, the computing device 202 can provide a user interface, such as a microphone, for receiving spoken natural language inputs from a user. In some implementations, the computing device 202 can include a touch interface and can be void of a camera, but can optionally include one or more other sensors.

The computing device 202 and/or other third party client devices can be in communication with a server device over a network, such as the internet. Additionally, the computing device 202 and any other computing devices can be in communication with each other over a local area network (LAN), such as a Wi-Fi network. The computing device 202 can offload computational tasks to the server device in order to conserve computational resources at the computing device 202. For instance, the server device can host the automated assistant 204, and/or computing device 202 can transmit inputs received at one or more assistant interfaces 220 to the server device. However, in some implementations, the automated assistant 204 can be hosted at the computing device 202, and various processes that can be associated with automated assistant operations can be performed at the computing device 202.

In various implementations, all or less than all aspects of the automated assistant 204 can be implemented on the computing device 202. In some of those implementations, aspects of the automated assistant 204 are implemented via the computing device 202 and can interface with a server device, which can implement other aspects of the automated assistant 204. The server device can optionally serve a plurality of users and their associated assistant applications via multiple threads. In implementations where all or less than all aspects of the automated assistant 204 are implemented via computing device 202, the automated assistant 204 can be an application that is separate from an operating system of the computing device 202 (*e.g.,* installed "on top" of the operating system) - or can alternatively be implemented directly by the operating system of the computing device 202 (*e.g*., considered an application of, but integral with, the operating system).

In some implementations, the automated assistant 204 can include an input processing engine 206, which can employ multiple different modules for processing inputs and/or outputs for the computing device 202 and/or a server device. For instance, the input processing engine 206 can include a speech processing engine 208, which can process audio data received at an assistant interface 220 to identify the text embodied in the audio data. The audio data can be transmitted from, for example, the computing device 202 to the server device in order to preserve computational resources at the computing device 202. Additionally, or alternatively, the audio data can be exclusively processed at the computing device 202.

The process for converting the audio data to text can include a speech recognition algorithm, which can employ neural networks, and/or statistical models for identifying groups of audio data corresponding to words or phrases. The text converted from the audio data can be parsed by a data parsing engine 210 and made available to the automated assistant 204 as textual data that can be used to generate and/or identify command phrase(s), intent(s), action(s), slot value(s), and/or any other content specified by the user. In some implementations, output data provided by the data parsing engine 210 can be provided to a parameter engine 212 to determine whether the user provided an input that corresponds to a particular intent, action, and/or routine capable of being performed by the automated assistant 204 and/or an application or agent that is capable of being accessed via the automated assistant 204. For example, assistant data 238 can be stored at the server device and/or the computing device 202, and can include data that defines one or more actions capable of being performed by the automated assistant 204, as well as parameters necessary to perform the actions. The parameter engine 212 can generate one or more parameters for an intent, action, and/or slot value, and provide the one or more parameters to an output generating engine 214. The output generating engine 214 can use the one or more parameters to communicate with an assistant interface 220 for providing an output to a user, and/or communicate with one or more applications 234 for providing an output to one or more applications 234.

In some implementations, the automated assistant 204 can be an application that can be installed "on-top of" an operating system of the computing device 202 and/or can itself form part of (or the entirety of) the operating system of the computing device 202. The automated assistant application includes, and/or has access to, on-device speech recognition, on-device natural language understanding, and on-device fulfillment. For example, on-device speech recognition can be performed using an on-device speech recognition module that processes audio data (detected by the microphone(s)) using an end-to-end speech recognition machine learning model stored locally at the computing device 202. The on-device speech recognition generates recognized text for a spoken utterance (if any) present in the audio data. Also, for example, on-device natural language understanding (NLU) can be performed using an on-device NLU module that processes recognized text, generated using the on-device speech recognition, and optionally contextual data, to generate NLU data. In some implementations, on-device speech recognition, on-device NLU, and/or on-device fulfillment can be omitted. In these implementations, on-device generative model(s) can be utilized in the same or similar manner to generate the same or similar data and at least due to their multimodal nature described herein.

NLU data can include intent(s) that correspond to the spoken utterance and optionally parameter(s) (*e.g*., slot values) for the intent(s). On-device fulfillment can be performed using an on-device fulfillment module that utilizes the NLU data (from the on-device NLU), and optionally other local data, to determine action(s) to take to resolve the intent(s) of the spoken utterance (and optionally the parameter(s) for the intent). This can include determining local and/or remote responses (*e.g*., answers) to the spoken utterance, interaction(s) with locally installed application(s) to perform based on the spoken utterance, command(s) to transmit to internet-of-things (IoT) device(s) (directly or via corresponding remote system(s)) based on the spoken utterance, and/or other resolution action(s) to perform based on the spoken utterance. The on-device fulfillment can then initiate local and/or remote performance/execution of the determined action(s) to resolve the spoken utterance.

In various implementations, remote speech processing, remote NLU, remote fulfillment, and/or remote generative model(s) can at least selectively be utilized. For example, recognized text can at least selectively be transmitted to remote automated assistant component(s) for remote NLU, remote fulfillment, and/or remote processing by remote generative model(s). For instance, the recognized text can optionally be transmitted for remote performance in parallel with on-device performance, or responsive to failure of on-device NLU, on-device fulfillment, and/or on-device processing by on-device generative model(s). However, on-device speech processing, on-device NLU, on-device fulfillment, on-device processing by generative model(s), and/or on-device execution can be prioritized at least due to the latency reductions they provide when resolving a spoken utterance (due to no client-server roundtrip(s) being needed to resolve the spoken utterance). Further, on-device functionality can be the only functionality that is available in situations with no or limited network connectivity.

In some implementations, the computing device 202 can include one or more applications 234 which can be provided by a third-party entity that is different from an entity that provided the computing device 202 and/or the automated assistant 204. An application state engine of the automated assistant 204 and/or the computing device 202 can access application data 230 to determine one or more actions capable of being performed by one or more applications 234, as well as a state of each application of the one or more applications 234 and/or a state of a respective device that is associated with the computing device 202. A device state engine of the automated assistant 204 and/or the computing device 202 can access device data 232 to determine one or more actions capable of being performed by the computing device 202 and/or one or more devices that are associated with the computing device 202. Furthermore, the application data 230 and/or any other data (*e.g*., device data 232) can be accessed by the automated assistant 204 to generate contextual data 236, which can characterize a context in which a particular application 234 and/or device is executing, and/or a context in which a particular user is accessing the computing device 202, accessing an application 234, and/or any other device or module.

While one or more applications 234 are executing at the computing device 202, the device data 232 can characterize a current operating state of each application 234 executing at the computing device 202. Furthermore, the application data 230 can characterize one or more features of an executing application 234, such as content of one or more graphical user interfaces being rendered at the direction of one or more applications 234. Alternatively, or additionally, the application data 230 can characterize an action schema, which can be updated by a respective application and/or by the automated assistant 204, based on a current operating status of the respective application. Alternatively, or additionally, one or more action schemas for one or more applications 234 can remain static, but can be accessed by the application state engine in order to determine a suitable action to initialize via the automated assistant 204.

The computing device 202 can further include an intermediate representation engine 216 for generating an intermediate representation of generative visual content. An intermediate representation of generative visual content can be generated in response to an input received by the automated assistant 204 and/or another generative application. A request for generative content, such as a generative image or a generative video, can be processed by the input processing engine 206 and the intermediate representation engine 216. The intermediate representation engine 216 can identify one or more terms in the request that correspond to one or more different objects and/or other entities. Using one or more heuristic processes and/or one or more local machine learning models (e.g., on-device generative model(s)), the intermediate representation engine 216 can generate a reduced version of the generative content with those identified entities and/or objects. In this way, the user can interact with the intermediate representation without causing significant computational resources to be consumed. Generative content, such as a digital image or video, can therefore be enhanced or modified in a computationally resource efficient manner.

The computing device 202 can further include a GUI element engine 218 that can identify and/or generate GUI elements for modifying the intermediate representation generated by the intermediate representation engine 216. For example, the GUI element engine 218 can identify one or more functions and/or one or more adjustable GUI elements that can be included with the intermediate representation for making annotations or other modifications to the intermediate representation. These modifications can include relocating objects that may be rendered in the intermediate representation, adjusting an environment that is depicted in the intermediate representation, manipulating a bounding box that is rendered in association with an object in the intermediate representation, and/or any other adjustment that can be made to a computerized image. In some implementations, each adjustable GUI element can be selected according to one or more heuristic processes and/or one or more trained machine learning models available at the computing device 202. The selected GUI elements can be based on the request from the user. Therefore, the GUI elements that are generated for each request may be different, but nonetheless related to the generative visual content requested by the user.

The computing device 202 can further include a content modification engine 226 that can generate visual content data based on the modified intermediate representation of the generative visual content requested by the user. By generating data that characterizes the modifications and/or the intermediate representation, the computing device 202 can provide the generated data to a remote computing device for further processing. In other words, the data generated by the content modification engine 226 can be data that is of less volume or otherwise reduced in complexity relative to data that is subsequently generated by a remote computing device to characterize the generated visual content in a final form. In some implementations, a number of shapes characterized by the visual content data can be less than a quantity of shapes characterized by the generative content provided by the remote computing device to represent the final form of the requested generative visual content. In some instances, the visual content data characterizing the modified intermediate representation can be of less volume than a volume of data provided by the remote computing device to characterize the generative visual data in a final form.

The computing device 202 can further include a generative content engine 224 that can render the generative visual content data received from the remote computing device. The data received from the remote computing device can embody the adjustments made to the intermediate representation by the user through a visual content editor interface provided by the application or automated assistant 204. For example, when the user has selected a particular object (*e.g*., via a touch gesture) in the intermediate representation and relocated the object in the intermediate representation, this updated location of the object can be reflected in the generative visual content data provided by the remote computing device. In other words, the intermediate representation engine 216 can render the particular object at an initial location, but, in response to a touch gesture input from the user, can maneuver the object to a different location in an environment represented in the intermediate representation. Alternatively, or additionally, the content modification engine 226 can generate visual content data that characterizes annotations made by the user via the visual editor interface. These annotations can include lines, shapes, text, and/or other visual inputs provided by the user to the interface to reflect changes that, when implemented, would reflect the original intent of the request for generative visual content.

The computing device 202 can further include a training data engine 222 that can generate training data based on inputs to the visual content editor interface and the generative visual content data received from the remote computing device. Alternatively, or additionally, the training data engine 222 can generate training data based on the request received from the user and the generative visual content data received from the remote computing device. Alternatively, or additionally, the training data engine 222 can generate training data based on the request received from the user and the inputs received at the visual content editor interface. The training data can then be used to train one or more machine learning models available at the computing device 202 and/or at the remote computing device.

For example, when the user requests generative visual content and identifies a particular environment and a particular object, the GUI element engine 218 can select adjustable GUI elements for modifying one or more features of the rendered environment and the rendered object. When the user interacts with the adjustable GUI elements that are selected, training data can indicate that the selected GUI elements are relevant to the user making requests that include one or more of the same terms included in the original request from the user. Alternatively, or additionally, when the user adjusts a bounding box within a visual content frame rendered around the intermediate representation, a perspective view and/or orientation of the depicted environment can be modified. This modification can be captured or characterized by data generated by the training data engine 222. In this way, using the training data to train one or more of the trained machine learning models can result in the intermediate representation being more accurately depicted in a first response to a user request rather than requiring the user to make such modifications via the visual content editor interface. This can further preserve computational resources at the computing device 202, as well as the remote computing device, considering less input data (*e.g*., intermediate representation data) would need to be provided to the remote computing device for processing.

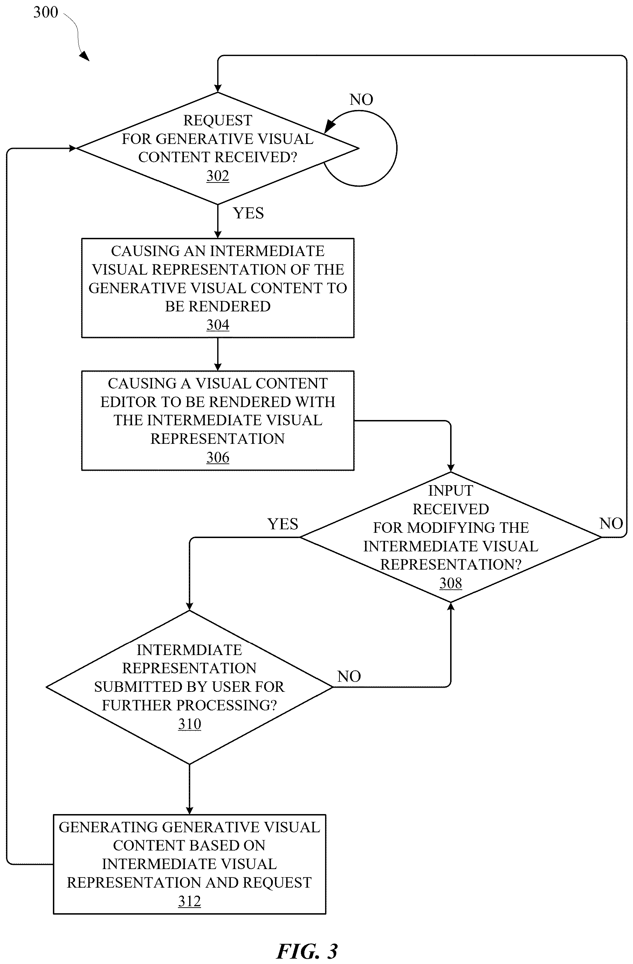

FIG. 3 illustrates a method 300 for providing a visual content editor for an intermediate representation of generative content in furtherance of preserving computational resources and providing more accurate generative visual content. The method 300 can be performed by one or more devices, applications, and/or any other apparatus or module capable of providing generative content. The method 300 can include an operation 302 of determining whether a request for generative visual content has been received from a user. The request can be received at an application or computing device as a textual input, audio input, and/or any other input that specifies one or more details for the proposed generative visual content. For example, a user can provide a request using textual input, such as "Generate an image of a person walking around Washington, DC, when cherry blossoms are blooming."

In response to receiving the request, the method 300 can proceed from the operation 302 to an operation 304. The operation 304 can include causing an intermediate visual representation of the generative visual content to be rendered at the application or another interface. The intermediate representation of the requested content can be a reduced version of the generative visual content. For example, features of the intermediate visual representation can be simplified or otherwise represented with less data relative to the data utilized to render a final version of the requested generative visual content. In some instances, the intermediate representation may include a smaller range of colors than the final version of the generative visual content. In some instances, the intermediate representation can embody a lower resolution, or include a smaller range of shapes, relative to the final version of the generative visual content. In this way, modifications or other changes made to the intermediate representation can be performed with lower resource consumption and latency compared to making changes to the final version of the generative visual content.

The method 300 can include an operation 306, which can include causing a visual content editor to be rendered with the intermediate visual representation. In some implementations, the operation 304 and the operation 304 can be performed simultaneously, or not simultaneously. The visual content editor can be rendered with the intermediate representation to notify the user that they may edit the intermediate representation before further processing is performed using one or more machine learning models available to the application. In some implementations, the user request can be processed to determine one or more GUI elements to be included with the visual content editor. For example, one or more heuristic processes and/or one or more trained machine learning models can be utilized to determine relevant GUI elements for modifying features of the intermediate representation of the visual content.

As one non-limiting example, an interactive GUI element can be rendered for modifying a direction of gaze of a person or animal when the user request indicates that a person or animal is to be included in the generative visual content. Alternatively, or additionally, when the user request indicates that the generative visual content may include a landscape or natural landscape, the visual content editor can be rendered with another interactive GUI element for modifying the time of day and/or the apparent weather visible in the intermediate representation and, ultimately, in the final generative visual content.

In some implementations, one or more entities identified in the user request and depicted in the intermediate representation can be rendered with one or more bounding boxes. Each bounding box can be another interactive GUI element that can be modified through one or more interfaces of a computing device. For example, using a touch interface or other device interface, a user can adjust a bounding box associated with a particular entity, such as a drawing or rendered image of a person. In some implementations, users can change a focal point of an image relative to the person, zoom in or out, perform a dynamic zoom when the generative content is a video, indicate a desired aspect ratio, and/or modify the shape of an entity or any space surrounding the entity.

In some implementations, the method 300 can proceed from an operation 306 to an operation 308 for determining whether any input has been received for modifying the intermediate visual representation. Inputs for modifying the intermediate visual representation can be received through one or more interactive GUI elements rendered in the visual content editor. As the user interacts with these GUI elements or otherwise provides additional input to the application, additional data can be generated to characterize the modifications being proposed for the generative visual content. This additional data can be stored in association with the initial request from the user, thereby allowing this collection of data to be processed by one or more trained machine learning models to generate a final version of the requested generative visual content.

In some implementations, the method 300 can proceed from the operation 308 to an operation 310 for determining whether the user has caused the intermediate representation to be submitted for further processing. For example, a user may provide an indication to the application that they have completed their edits to the intermediate visual representation. In response to receiving this indication, the method 300 can proceed from the operation 310 to an operation 312. However, should the user desire to perform more edits using the visual content editor, the method 300 can proceed from the operation 310 back to the operation 308. Otherwise, if the user does not wish to receive the final version of the generative visual content or seeks to request a completely different generative image or video, the method 300 can proceed from the operation 308 to the operation 302.

The operation 312 can include causing generative visual content to be generated based on the intermediate visual representation as modified by the user and/or based on the initial request provided by the user. In some implementations, generation and modification of the intermediate representation can be performed at a local computing device providing access to the application. In some implementations, the operation 312 can be performed at a separate computing device to preserve computational resources at the local computing device. Alternatively, or additionally, the local computing device providing access to the application may offload some processing tasks to a remote computing device, with the remote computing device performing more of the data processing involved in generating the generative visual content.

In some implementations, the generative visual content generated using one or more trained machine learning models at the remote computing device can be further modified by the user through the visual content editor. In some cases, the generative visual content ultimately rendered by the application can be reduced, and the reduced version of the generative visual content can be available for editing via the visual content editor. In other words, if the user decides to further edit the final version of the generative visual content, a subsequent version of the intermediate representation can be provided so that computational resources are preserved at the local computing device, and so the remote computing device can process the final version of the modified intermediate representation. In some implementations, interactions between the user and the visual editor or interactive GUI elements can be characterized by data with prior permission from the user. This data can then be utilized as training data for training one or more models that can subsequently be used for generating a future instance of the visual content editor.

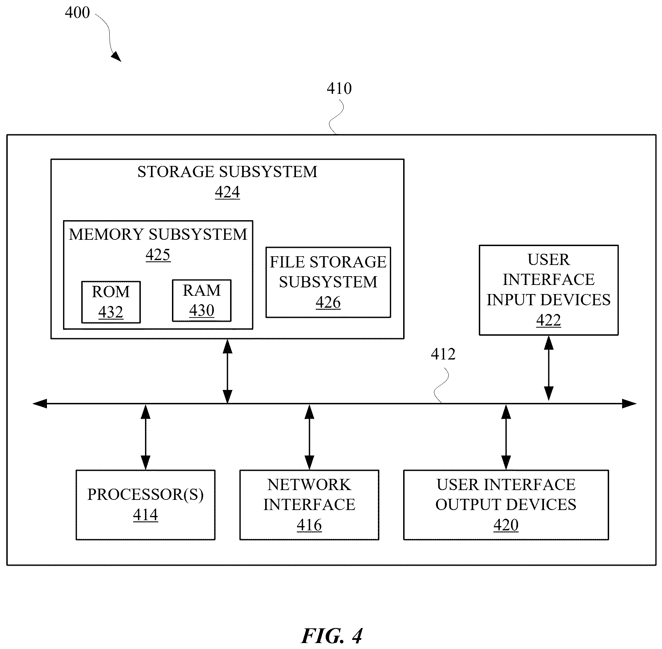

FIG. 4 is a block diagram 400 of an example computer system 410. Computer system 410 typically includes at least one processor 414 which communicates with a number of peripheral devices via bus subsystem 412. These peripheral devices may include a storage subsystem 424, including, for example, a memory 425 and a file storage subsystem 426, user interface output devices 420, user interface input devices 422, and a network interface subsystem 416. The input and output devices allow user interaction with computer system 410. Network interface subsystem 416 provides an interface to outside networks and is coupled to corresponding interface devices in other computer systems.

User interface input devices 422 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into computer system 410 or onto a communication network.

User interface output devices 420 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computer system 410 to the user or to another machine or computer system.

Storage subsystem 424 stores programming and data constructs that provide the functionality of some or all of the modules described herein. For example, the storage subsystem 424 may include the logic to perform selected aspects of method 300, and/or to implement one or more of system 200, computing device 104, automated assistant, and/or any other application, device, apparatus, and/or module discussed herein.

These software modules are generally executed by processor 414 alone or in combination with other processors. Memory 425 used in the storage subsystem 424 can include a number of memories including a main random access memory (RAM) 430 for storage of instructions and data during program execution and a read only memory (ROM) 432 in which fixed instructions are stored. A file storage subsystem 426 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 426 in the storage subsystem 424, or in other machines accessible by the processor(s) 414.

Bus subsystem 412 provides a mechanism for letting the various components and subsystems of computer system 410 communicate with each other as intended. Although bus subsystem 412 is shown schematically as a single bus, alternative implementations of the bus subsystem may use multiple busses.

Computer system 410 can be of varying types including a workstation, server, computing cluster, blade server, server farm, or any other data processing system or computing device. Due to the ever-changing nature of computers and networks, the description of computer system 410 depicted in FIG. 4 is intended only as a specific example for purposes of illustrating some implementations. Many other configurations of computer system 410 are possible having more or fewer components than the computer system depicted in FIG. 4.

In situations in which the systems described herein collect personal information about users (or as often referred to herein, "participants"), or may make use of personal information, the users may be provided with an opportunity to control whether programs or features collect user information (*e.g*., information about a user's social network, social actions or activities, profession, a user's preferences, or a user's current geographic location), or to control whether and/or how to receive content from the content server that may be more relevant to the user. Also, certain data may be treated in one or more ways before it is stored or used, so that personal identifiable information is removed. For example, a user's identity may be treated so that no personal identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

While several implementations have been described and illustrated herein, a variety of other means and/or structures for performing the function and/or obtaining the results and/or one or more of the advantages described herein may be utilized, and each of such variations and/or modifications is deemed to be within the scope of the implementations described herein. More generally, all parameters, dimensions, materials, and configurations described herein are meant to be exemplary and that the actual parameters, dimensions, materials, and/or configurations will depend upon the specific application or applications for which the teachings is/are used. Those skilled in the art will recognize, or be able to ascertain using no more than routine experimentation, many equivalents to the specific implementations described herein. It is, therefore, to be understood that the foregoing implementations are presented by way of example only and that, within the scope of the appended claims and equivalents thereto, implementations may be practiced otherwise than as specifically described and claimed. Implementations of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the scope of the present disclosure.

In some implementations, a method implemented by one or more processors is provided and includes receiving a request for generative visual content to be rendered at a display interface of a computing device; and causing visual content editor interface to be rendered at the display interface of the computing device in response to receiving the request. The visual content editor interface includes an intermediate representation of the generative visual content that a user can modify by providing inputs to the visual content editor interface. The method further includes receiving a user input at the visual content editor interface for modifying the intermediate representation of the generative visual content; generating generative visual content data that characterizes the intermediate representation of the generative visual content as modified according to the user input; causing the generative visual content data and the request to be processed using one or more trained machine learning models in furtherance of generating the generative visual content; and causing the generative visual content to be rendered at the display interface of the computing device.

These and other implementations disclosed herein can optionally include one or more of the following features.

In some implementations, the visual content editor interface can include a graphical user interface (GUI) element that is adjustable to modify an initial location of an object represented in the intermediate representation of the generative visual content.

In some versions of those implementations, the user input can correspond to another request to modify the initial location of the object represented in the intermediate representation of the generative visual content, and the generative visual content rendered at the display interface can include the object at a modified location relative to the initial location.

In some implementations, the user input at the visual content editor interface can modify the intermediate representation of the generative visual content to include a graphical annotation, and the generative visual content rendered at the display interface can include one or more visual features that are based on the graphical annotation to the intermediate representation of the generative visual content.

In some implementations, the intermediate representation of the generative visual content can include a visual content frame and a bounding box around an object specified in the request.

In some versions of those implementations, the object can be one or more of: a person, an animal, a vehicle, or another entity.

In some implementations, the generative visual content can be rendered at the display interface of the computing device without relying the one or more trained machine learning models for generating the intermediate representation of the generative visual content.

In some implementations, the method can further include determining, based on one or more terms included in the request, whether to cause to the visual content editor interface to be rendered at the display interface of the computing device. Causing the visual content editor interface to be rendered at the display interface of the computing device can be further in response to determining to cause the visual content editor interface to be rendered at the display interface of the computing device.

In some implementations, the generative visual content rendered at the display interface can be a generative image or a generative video.

In some implementations, the intermediate representation of the generative visual content may not include any generative content.

In some implementations, a method implemented by one or more processors is provided and includes receiving, at a local computing device, a user request for generative visual content to be rendered at a display interface of the local computing device; selecting, based on the user request, an adjustable GUI element for rendering with a visual content editor interface at the display interface; generating, based on the user request, an intermediate representation of the generative visual content requested by a user; causing the visual content editor interface, the adjustable GUI element, and the intermediate representation of the generative visual content to be rendered at the display interface of the local computing device; receiving, at the local computing device, a visual editor input that corresponds to an interaction between the user and the adjustable GUI element of the visual content editor interface; and subsequent to receiving the user input: providing input data to a remote computing device for processing using one or more trained machine learning models; receiving, from the remote computing device, generative visual content data that is generated by the remote computing device using the one or more trained machine learning models; and causing the display interface of the computing device to render the generative visual content based on the generative visual content data received from the remote computing device. The input data characterizes the visual editor input and the user request.

These and other implementations disclosed herein can optionally include one or more of the following features.

In some implementations, selecting the adjustable GUI element for the visual content editor interface is performed at the local computing device without relying on the one or more trained machine learning models.

In some implementations, generating the intermediate representation can be performed at the local computing device without relying on the one or more trained machine learning models.

In some implementations, the method can further include determining that one or more natural language terms of the request identify an object to be represented in the generative visual content. The adjustable GUI element can be a bounding box to be rendered around an intermediate object representation corresponding to the object.

In some implementations, the method can further include determining that one or more natural language terms of the request identify an environment to be represented in the generative visual content. The adjustable GUI element can be modifiable in at least two dimensions via gesture input to the display interface of the local computing device.

In some versions of those implementations, the user input can be a user gesture directed to the adjustable GUI element for modifying a characteristic of a rendered environment of the intermediate representation of the generative visual content; and the generative visual content data can characterize the rendered environment as modified according to the user gesture.

In some further versions of those implementations, the adjustable GUI element can correspond to a touch interface function that adjusts an orientation of a perspective of a rendered environment that is included in the intermediate representation of the generative visual content.

In some implementations, a method implemented by one or more processors is provided and includes receiving a user input to a visual content editor interface for modifying an intermediate representation of generative visual content requested by a user; causing, based on the user input, a display interface to render a modified version of the intermediate representation of the generative visual content; providing, to a separate computing device, input data that characterizes the modified version of the intermediate representation of the generative visual content; and receiving, from the separate computing device, generative visual content data that characterizes the generative visual content that is different from the intermediate representation of the generative visual content. The separate computing device processes the input data using one or more trained machine learning models.

These and other implementations disclosed herein can optionally include one or more of the following features.

In some implementations, the generative visual content data can have a greater volume of data than other data that characterizes the intermediate representation of the generative visual content.

In some implementations, the user input can be a touch input received at an adjustable GUI element of the visual content editor interface being rendered at the display interface with the intermediate representation of the generative visual content.

In some implementations, the generative visual content data can characterize a larger quantity of shapes than a reduced quantity of shapes rendered with the intermediate representation of the generative visual content.

Other implementations may include a non-transitory computer readable storage medium storing instructions executable by one or more processors (*e.g*., central processing unit(s) (CPU(s)), graphics processing unit(s) (GPU(s)), and/or tensor processing unit(s) (TPU(s)) to perform a method such as one or more of the methods described above and/or elsewhere herein. Yet other implementations may include a system of one or more computers that include one or more processors operable to execute stored instructions to perform a method such as one or more of the methods described above and/or elsewhere herein.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

The following numbered examples are also disclosed:
Example 1. A method implemented by one or more processors, the method comprising: receiving a request for generative visual content to be rendered at a display interface of a computing device; causing visual content editor interface to be rendered at the display interface of the computing device in response to receiving the request, wherein the visual content editor interface includes an intermediate representation of the generative visual content that a user can modify by providing inputs to the visual content editor interface; receiving a user input at the visual content editor interface for modifying the intermediate representation of the generative visual content; generating generative visual content data that characterizes the intermediate representation of the generative visual content as modified according to the user input; causing the generative visual content data and the request to be processed using one or more trained machine learning models in furtherance of generating the generative visual content; and causing the generative visual content to be rendered at the display interface of the computing device.
Example 2. The method of example 1, wherein the visual content editor interface includes a graphical user interface (GUI) element that is adjustable to modify an initial location of an object represented in the intermediate representation of the generative visual content.
Example 3. The method of example 2, wherein the user input corresponds to another request to modify the initial location of the object represented in the intermediate representation of the generative visual content, and wherein the generative visual content rendered at the display interface includes the object at a modified location relative to the initial location.
Example 4. The method of example 1, wherein the user input at the visual content editor interface modifies the intermediate representation of the generative visual content to include a graphical annotation, and wherein the generative visual content rendered at the display interface includes one or more visual features that are based on the graphical annotation to the intermediate representation of the generative visual content.
Example 5. The method of example 1, wherein the intermediate representation of the generative visual content includes a visual content frame and a bounding box around an object specified in the request.
Example 6. The method of example 5, wherein the object is one or more of: a person, an animal, a vehicle, or another entity.
Example 7. The method of example 1, wherein the generative visual content is rendered at the display interface of the computing device without relying the one or more trained machine learning models for generating the intermediate representation of the generative visual content.
Example 8. The method of example 1, further comprising: determining, based on one or more terms included in the request, whether to cause to the visual content editor interface to be rendered at the display interface of the computing device, wherein causing the visual content editor interface to be rendered at the display interface of the computing device is further in response to determining to cause the visual content editor interface to be rendered at the display interface of the computing device.
Example 9. The method of example 1, wherein the generative visual content rendered at the display interface is a generative image or a generative video.
Example 10. The method of example 1, wherein the intermediate representation of the generative visual content does not include any generative content.
Example 11. A method implemented by one or more processors, the method comprising: receiving, at a local computing device, a user request for generative visual content to be rendered at a display interface of the local computing device; selecting, based on the user request, an adjustable GUI element for rendering with a visual content editor interface at the display interface; generating, based on the user request, an intermediate representation of the generative visual content requested by a user; causing the visual content editor interface, the adjustable GUI element, and the intermediate representation of the generative visual content to be rendered at the display interface of the local computing device; receiving, at the local computing device, a visual editor input that corresponds to an interaction between the user and the adjustable GUI element of the visual content editor interface; and subsequent to receiving the user input: providing input data to a remote computing device for processing using one or more trained machine learning models, wherein the input data characterizes the visual editor input and the user request; receiving, from the remote computing device, generative visual content data that is generated by the remote computing device using the one or more trained machine learning models; and causing the display interface of the computing device to render the generative visual content based on the generative visual content data received from the remote computing device.
Example 12. The method of example 11, wherein selecting the adjustable GUI element for the visual content editor interface is performed at the local computing device without relying on the one or more trained machine learning models.
Example 13. The method of example 11, wherein generating the intermediate representation is performed at the local computing device without relying on the one or more trained machine learning models.
Example 14. The method of example 11, further comprising: determining that one or more natural language terms of the request identify an object to be represented in the generative visual content, wherein the adjustable GUI element is a bounding box to be rendered around an intermediate object representation corresponding to the object.
Example 15. The method of example 11, further comprising: determining that one or more natural language terms of the request identify an environment to be represented in the generative visual content, wherein the adjustable GUI element is modifiable in at least two dimensions via gesture input to the display interface of the local computing device.
Example 16. The method of example 15, wherein the user input is a user gesture directed to the adjustable GUI element for modifying a characteristic of a rendered environment of the intermediate representation of the generative visual content; and wherein the generative visual content data characterizes the rendered environment as modified according to the user gesture.
Example 17. The method of example 16, wherein the adjustable GUI element corresponds to a touch interface function that adjusts an orientation of a perspective of a rendered environment that is included in the intermediate representation of the generative visual content.
Example 18. A method implemented by one or more processors, the method comprising: receiving a user input to a visual content editor interface for modifying an intermediate representation of generative visual content requested by a user; causing, based on the user input, a display interface to render a modified version of the intermediate representation of the generative visual content; providing, to a separate computing device, input data that characterizes the modified version of the intermediate representation of the generative visual content, wherein the separate computing device processes the input data using one or more trained machine learning models; and receiving, from the separate computing device, generative visual content data that characterizes the generative visual content that is different from the intermediate representation of the generative visual content.
Example 19. The method of example 18, wherein the generative visual content data has a greater volume of data than other data that characterizes the intermediate representation of the generative visual content.
Example 20. The method of example 18, wherein the user input is a touch input received at an adjustable GUI element of the visual content editor interface being rendered at the display interface with the intermediate representation of the generative visual content.
Example 21. The method of example 18, wherein the generative visual content data characterizes a larger quantity of shapes than a reduced quantity of shapes rendered with the intermediate representation of the generative visual content.
Example 22. A system comprising: at least one processor; and memory storing instructions that, when executed, cause the at least one processor to be operable to perform the method of any one of examples 1 to 21.
Example 23. A non-transitory computer-readable storage medium storing instructions that, when executed by at least one processor, cause the at least one processor to perform operations according to the method of any one of examples 1 to 21.

## Claims

1. A method implemented by one or more processors, the method comprising:
receiving a request for generative visual content to be rendered at a display interface of a computing device;
causing a visual content editor interface to be rendered at the display interface of the
computing device in response to receiving the request,
wherein the visual content editor interface includes an intermediate representation of the generative visual content that a user can modify by providing inputs to the visual content editor interface;
receiving a user input at the visual content editor interface for modifying the intermediate representation of the generative visual content;
generating generative visual content data that characterizes the intermediate representation of the generative visual content as modified according to the user input;
causing the generative visual content data and the request to be processed using one or more trained machine learning models in furtherance of generating the generative visual content; and
causing the generative visual content to be rendered at the display interface of the computing device.

2. The method of claim 1, wherein the visual content editor interface includes a graphical user interface (GUI) element that is adjustable to modify an initial location of an object represented in the intermediate representation of the generative visual content.

3. The method of claim 2,
wherein the user input corresponds to another request to modify the initial location of the object represented in the intermediate representation of the generative visual content, and
wherein the generative visual content rendered at the display interface includes the object at a modified location relative to the initial location.

4. The method of any of claims 1 to 3,
wherein the user input at the visual content editor interface modifies the intermediate representation of the generative visual content to include a graphical annotation, and
wherein the generative visual content rendered at the display interface includes one or more visual features that are based on the graphical annotation to the intermediate representation of the generative visual content.

5. The method of claim 1, wherein the intermediate representation of the generative visual content includes a visual content frame and a bounding box around an object specified in the request,
optionally, wherein the object is one or more of: a person, an animal, a vehicle, or another entity.

6. The method of any of claims 1 to 5, wherein the generative visual content is rendered at the display interface of the computing device without relying on the one or more trained machine learning models for generating the intermediate representation of the generative visual content.

7. The method of any of claims 1 to 6, further comprising:
determining, based on one or more terms included in the request, whether to cause the visual content editor interface to be rendered at the display interface of the computing device,
wherein causing the visual content editor interface to be rendered at the display interface of the computing device is further in response to determining to cause the visual content editor interface to be rendered at the display interface of the computing device.

8. The method of any of claims 1 to 7, wherein the generative visual content rendered at the display interface is a generative image or a generative video.

9. The method of any of claims 1 to 8, wherein the intermediate representation of the generative visual content does not include any generative content.

10. A method implemented by one or more processors, the method comprising:
receiving, at a local computing device, a user request for generative visual content to be rendered at a display interface of the local computing device;
selecting, based on the user request, an adjustable GUI element for rendering with a visual content editor interface at the display interface;
generating, based on the user request, an intermediate representation of the generative visual content requested by a user;
causing the visual content editor interface, the adjustable GUI element, and the intermediate representation of the generative visual content to be rendered at the display interface of the local computing device;
receiving, at the local computing device, a visual editor input that corresponds to an interaction between the user and the adjustable GUI element of the visual content editor interface; and
subsequent to receiving the visual editor input:
providing input data to a remote computing device for processing using one or more trained machine learning models,
wherein the input data characterizes the visual editor input and the user request;
receiving, from the remote computing device, generative visual content data that is generated by the remote computing device using the one or more trained machine learning models; and
causing the display interface of the local computing device to render the generative visual content based on the generative visual content data received from the remote computing device.

11. The method of claim 10, wherein selecting the adjustable GUI element for the visual content editor interface is performed at the local computing device without relying on the one or more trained machine learning models and/or wherein generating the intermediate representation is performed at the local computing device without relying on the one or more trained machine learning models.

12. The method of claim 10 or claim 11, further comprising:
determining that one or more natural language terms of the user request identify an object to be represented in the generative visual content,
wherein the adjustable GUI element is a bounding box to be rendered around an intermediate object representation corresponding to the object; and/or
determining that one or more natural language terms of the request identify an environment to be represented in the generative visual content,
wherein the adjustable GUI element is modifiable in at least two dimensions via gesture input to the display interface of the local computing device.

13. The method of any of claims 10 to 12,
wherein the visual editor input is a user gesture directed to the adjustable GUI element for modifying a characteristic of a rendered environment of the intermediate representation of the generative visual content; and
wherein the generative visual content data characterizes the rendered environment as modified according to the user gesture,
optionally, wherein the adjustable GUI element corresponds to a touch interface function that adjusts an orientation of a perspective of the rendered environment that is included in the intermediate representation of the generative visual content.

14. A system comprising:
at least one processor; and
memory storing instructions that, when executed, cause the at least one processor to be operable to perform the method of any one of claims 1 to 13.

15. A non-transitory computer-readable storage medium storing instructions that, when executed by at least one processor, cause the at least one processor to perform operations according to the method of any one of claims 1 to 13.
